# EUROPEAN PATENT APPLICATION

(11) **EP 4 723 317 A1**
(43) Date of publication of application: **08.04.2026**
(21) Application number: 23939882.9
(22) Date of filing: 13.11.2023
(51) Int. Cl.: H01M 50/116, H01M 50/107, H01M 10/04

(54) **BATTERY AND METHOD FOR MANUFACTURING BATTERY**

(30) Priority: 31.05.2023 KR 20230070209
(71) Applicant: Libest Inc., Daejeon 34002 (KR)
(72) Inventor: KIM, Joo Seong, Sejong 30147 (KR); LIM, Seung Gyu, Gwangju 61424 (KR); KIM, Seon Kyong, Daejeon 34304 (KR); JANG, Ji Hoon, Gyeryong-si Chungcheongnam-do 32843 (KR); LEE, Gil Ju, Daejeon 34304 (KR); LEE, Yun Ho, Daejeon 34171 (KR); YANG, Jung Hwan, Daejeon 34002 (KR)
(74) Representative: Brann AB
(86) International application number: PCT/KR2023/018164
(87) International publication number: WO 2024/248243

(57) **Abstract**

A battery includes: an electrode assembly including a plurality of electrodes; and an exterior material which accommodates the electrode assembly and on which a concavo-convex pattern including at least one concave portion and at least one convex portion is formed, and a recess portion recessed at a part of the convex portion is formed at the convex portion.

## Description

### TECHNICAL FIELD

The present disclosure relates to a battery which is chargeable and dischargeable and can be provided as a power source for a mobile or flexible device.

### BACKGROUND

A battery, i.e., an electrochemical cell, refers to an assembly that is composed of at least two electrodes and an electrolyte to provide electrical energy, and in particular, chargeable and dischargeable secondary batteries are being widely used in various advanced electronic devices including smart phones.

Recently, various attempts have been made to deviate from conventional shapes in the design of mobile devices, including smartphones, and various wearable devices. Also, attention is increasing on flexible devices which can be bent while maintaining their functions. Accordingly, it is important to ensure the reliability and safety of a flexible battery which can be built in such a flexible device and used as a power source.

In this regard, Patent Document 1 (KR10-2022-0015290 A), which is a prior art, discloses a technique of forming a pattern on an exterior material. Patent Document 1 discloses a configuration in which at least one pattern part is formed on the exterior material in a transverse direction (TD) of the exterior material. However, when a battery is repeatedly bent with a high curvature, such a pattern causes changes in the gap between electrode layers stacked within the exterior material. If a large gap is formed between the layers, the reliability and safety of the battery are degraded.

A brief explanation will be provided below regarding an increase in gap between electrode layers in a conventional battery.

Inside an exterior material of the conventional battery, electrodes including a positive electrode and a negative electrode are arranged in a straight line and are stacked in close contact with each other while maintaining a constant distance. Thus, it can be seen that the gap between the electrode layers is uniform. In this case, an insulating material is placed between the electrodes to suppress short circuit, which may occur if the positive electrode and the negative electrode come into direct contact, and to allow lithium ions to move.

However, in the conventional battery subjected to repeated bending, the outermost electrode may slide inwards due to curvature when the battery is bent. When the battery is straightened again, the outermost electrode may not return to its original position, resulting in deformation. This deformation may cause the electrode layers, which initially have a uniform gap therebetween, to be partially lifted, resulting in irregular gaps.

Specifically, if the battery is deformed from a flat state (first state) to a bent state (second state) and then returns to a flat state (third state), an electrode that has been severely deformed into a curved shape or an irregular waveform shape (for example, the outermost electrode) may have difficulty returning to its original flat state. Particularly, in a structure where one side of the electrode is fixed and the other side is not, the outermost electrode is more susceptible to deformation compared to the other electrodes. Therefore, as the battery returns to its original state, the electrodes may be lifted or bent toward the pouch, resulting in irregular gaps.

### DISCLOSURE OF THE INVENTION

### PROBLEMS TO BE SOLVED BY THE INVENTION

The present disclosure is conceived to provide a battery including: an electrode assembly including a plurality of electrodes; and an exterior material which accommodates the electrode assembly and on which a concavo-convex pattern including at least one concave portion and at least one convex portion is formed.

Also, the present disclosure is conceived to provide a flexible battery configured to suppress irregular electrode layer gaps that may occur due to bending of the battery by forming a recess portion recessed at a part of a convex portion.

The problems to be solved by the present disclosure are not limited to the above-described problems. There may be other problems to be solved by the present disclosure.

### MEANS FOR SOLVING THE PROBLEMS

To solve the above-described problem, according to an exemplary embodiment, a battery may include: an electrode assembly including a plurality of electrodes; and an exterior material which accommodates the electrode assembly and on which a concavo-convex pattern including at least one concave portion and at least one convex portion is formed, and the convex portion includes a recess portion recessed at a part of the convex portion.

According to an exemplary embodiment, at least two recess portions may be formed on each of the at least one convex portion in one direction corresponding to a width of the battery.

According to an exemplary embodiment, a gap between at least two recess portions formed on a first convex portion among the at least one convex portion may be designed to be equal to a gap between at least two recess portions formed on a second convex portion located next to the first convex portion.

According to an exemplary embodiment, the recess portion may have a first gap relative to an edge area of the exterior material.

According to an exemplary embodiment, a gap between at least two recess portions formed on a first convex portion among the at least one convex portion may be designed to be different from a gap between at least two recess portions formed on a second convex portion located next to the first convex portion.

According to an exemplary embodiment, the recess portion formed on the first convex portion may have a second gap relative to an edge area of the exterior material.

According to an exemplary embodiment, the recess portion formed on the second convex portion may have a third gap relative to an edge area of the exterior material.

According to an exemplary embodiment, the exterior material may include: an accommodating part that accommodates the electrode assembly; and a sealing part that seals the electrode assembly by bonding sealing surfaces along edges of the accommodating part.

According to an exemplary embodiment, the at least one concave portion and the at least one convex portion may include an edge area that forms a boundary line in contact with the sealing part at an end portion in one direction corresponding to a width of the battery.

According to an exemplary embodiment, the sealing part may have a pattern having a lower height in a thickness direction of the exterior material than the concavo-convex pattern.

According to an exemplary embodiment, a reinforcing structure for maintaining a shape of the recess portion in the exterior material may be formed on the recess portion.

According to another exemplary embodiment, a method for manufacturing a battery may include: a process of forming at least one convex portion in one direction of an exterior material; a process of forming at least one concave portion that is disposed adjacent to the convex portion; a process of forming a recess portion on the at least one convex portion; a process of inserting an electrode assembly into the exterior material on which the recess portion is formed; and a process of sealing the exterior material into which the electrode assembly is inserted.

According to another exemplary embodiment, the method may further include a process of pressing the exterior material on which the convex portion is formed, and in the process of forming the recess portion, the recess portion may be formed in the convex portion of the pressed exterior material.

According to another exemplary embodiment, the process of forming the concave portion may be performed before or after the process of pressing the exterior material on which the convex portion is formed.

According to another exemplary embodiment, the method may further include a process of additionally pressing the exterior material when the concave portion is formed after the pressing of the exterior material on which the convex portion is formed.

### EFFECTS OF THE INVENTION

According to the present disclosure, a battery includes: an electrode assembly including a plurality of electrodes; and an exterior material which accommodates the electrode assembly and on which a concavo-convex pattern including at least one concave portion and at least one convex portion is formed, and the convex portion includes a recess portion recessed at a part of the convex portion. Thus, when the battery is bent, the formation of irregular electrode layer gaps and large gaps can be suppressed.

Further, a reinforcing structure for maintaining a shape of the recess portion is formed on the recess portion recessed at a part of the convex portion. Thus, when the battery is bent or deformed, the occurrence of crack can be reduced by the strength of the reinforcing structure and its resistance to bearing loads.

### BRIEF DESCRIPTION OF THE DRAWINGS

**FIG.1** is a diagram illustrating a battery according to a first embodiment of the present disclosure.
**FIG. 2** is an enlarged view of an area A of the battery shown in **FIG. 1****.**
**FIG. 3** is a diagram illustrating a battery according to a second embodiment of the present disclosure.
**FIG. 4** is an enlarged view of an area B of the battery shown in **FIG. 3****.**
**FIG. 5** compares and evaluates a flexible battery with only a concavo-convex pattern and a flexible battery with both a concavo-convex pattern and a recess portion according to an embodiment of the present disclosure.
**FIG. 6** is a diagram illustrating a reinforcing structure for an exterior material formed on a recess portion according to the present disclosure.
**FIG. 7** is a flowchart showing a method for manufacturing a battery according to the present disclosure.
**FIG. 8** is a diagram illustrating the pattern depths formed in the respective processes for manufacturing the exterior material according to the present disclosure.

### MODE FOR CARRYING OUT THE INVENTION

Hereinafter, embodiments will be described in detail with reference to the accompanying drawings so that the present disclosure may be readily implemented by a person with ordinary skill in the art. However, it is to be noted that the present disclosure is not limited to the embodiments but can be embodied in various other ways. In the drawings, parts irrelevant to the description are omitted for the simplicity of explanation, and like reference numerals denote like parts throughout the whole document.

Further, throughout the whole document, the term "comprises or includes" and/or "comprising or including" used in the document means that one or more other components, steps, operation and/or existence or addition of elements are not excluded in addition to the described components, steps, operation and/or elements unless context dictates otherwise. Also, throughout the whole document, the term "connected to" may be used to designate a connection or coupling of one element to another element and includes both an element being directly connected to another element, an element being connected to another element via another element, and an element being electronically connected to another element via another element. Throughout the whole document, the term "on" that is used to designate a position of one element with respect to another element includes both a case that the one element is adjacent to the other element and a case that any other element exists between these two elements.

A battery, i.e., an electrochemical cell, according to the present disclosure may be a lithium-ion battery. Specifically, the electrochemical cell according to the present disclosure may be configured such that an electrode assembly is accommodated and sealed with an electrolyte within an exterior material, and charged and discharged by movement of lithium ions. The electrochemical cell according to the present disclosure may be configured to be bent with flexibility while maintaining its function. Hereinafter, embodiments of the present disclosure will be described in detail with reference to the accompanying drawings.

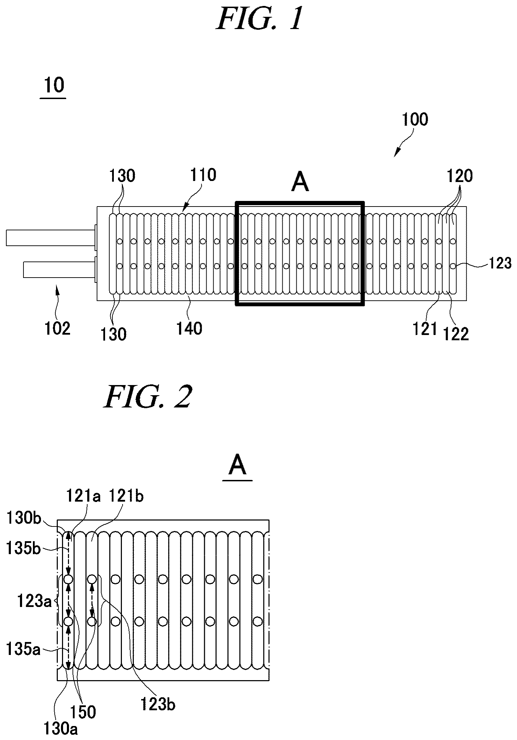

**FIG.1** is a diagram illustrating a battery according to a first embodiment of the present disclosure, and **FIG.** 2 is an enlarged view of an area A of the battery shown in **FIG.** 1. According to the first embodiment, a battery 10 is designed such that the gap between at least two recess portions formed on a first convex portion among at least one convex portion is equal to the gap between at least two recess portions formed on a second convex portion.

Referring to **FIG.** 1, the battery 10 according to the first embodiment of the present disclosure includes an exterior material 100, an electrode assembly and an electrode lead 102. The electrode assembly includes a plurality of electrodes and may further include an active material and a separator, and may have a structure in which they are stacked in a thickness direction.

The electrodes may include first and second electrode plates having different polarities, and an active material may be coated on both surfaces or one surface of each of the first and second electrode plates. A separator may be interposed between the first electrode plate and the second electrode plate. For example, in the first electrode plate, a current collector used as a negative electrode is made of copper, aluminum, stainless steel, etc., and a negative electrode active material includes one or a combination of carbon, lithium, silicon, silicon derivatives, such as SiOₓ, silicon-graphite composite, tin and silicon-tin composite. Also, in the second electrode plate, a current collector used as a positive electrode is made of aluminum, stainless steel, etc., and a positive electrode active material includes one or a combination of lithium cobalt oxide, lithium nickel oxide, lithium manganese oxide, lithium cobalt-manganese oxide, lithium cobalt-nickel oxide, lithium manganese-nickel oxide, lithium cobalt-nickel-manganese oxide, lithium cobalt-nickel-aluminum oxide and lithium iron phosphate. The electrode assembly has a shape having a small thickness in the thickness direction in which the active material and the separator are stacked, and the active material extends longer in a longitudinal direction than in a width direction among two directions in which the first and second electrode plates extend to form a surface, and intersects with (for example, orthogonal to) the directions in which the surface is formed.

Further, the electrode assembly may include electrode connection tabs and lead connection tabs. The electrode connection tabs may be formed to protrude from one ends of the first and second electrode plates in the longitudinal direction, and electrode connection tabs protruding from electrodes having the same polarity may be coupled to each other. The electrodes may be electrically connected in parallel by the electrode connection tabs. The lead connection tabs are connected to the electrode lead 102, and may protrude from the electrode plates of the negative electrode and the positive electrode so as to be coupled to the electrode lead 102.

The exterior material 100 according to the first embodiment of the present disclosure is formed to accommodate the electrode assembly. The exterior material 100 may be formed as a film having a stacked structure including, for example, polypropylene (PP), metal and nylon layers. In addition to nylon, combinations with other materials, such as polyethylene terephthalate (PET), polyvinyl chloride (PVC), polycarbonate (PC), polyethylene (PE), and polyimide (PI), are also possible.

More specifically, the exterior material 100 according to the first embodiment includes a concavo-convex pattern 120 including at least one concave portion 122 and at least one convex portion 121. The at least one concave portion 122 and the at least one convex portion 121 include an edge area 130 that forms a boundary line in contact with a sealing part 140 at an end portion in one direction corresponding to a width of the battery.

The edge area 130 may include a boundary line between the concavo-convex pattern 120 and the sealing part 140. That is, as shown in **FIG.** 1, the edge area 130 may include two points of each concavo-convex pattern 120 that are in contact with the sealing part 140 and a boundary line extending between the two points. The boundary line of the edge area 130 may extend in a substantially straight line along the sealing part 140 having a flat plate shape, and may be connected to the boundary line of the edge area 130 of a neighboring concavo-convex pattern 120 so as to extend as a single line.

For example, the concavo-convex pattern 120 extends in one direction and is repeatedly disposed in a direction intersecting with the one direction. Specifically, the concavo-convex pattern 120 is protruded and recessed alternately in the thickness direction (i.e., protruded alternately in opposite directions) so as to have a concavo-convex shape along the one direction. Here, the one direction may be the above-described width direction, and the direction in which the concavo-convex pattern 120 is repeated may be the longitudinal direction. Due to the protruded and recessed concavo-convex pattern 120, the exterior material 100 forming the accommodating part 110 may have a wave or crease pattern in the longitudinal direction.

Hereinafter, the concavo-convex pattern 120 will be described in more detail with reference to **FIG. 2****.**

a recess portion 123 recessed at a part of the convex portion 121 is formed at the convex portion 121. For example, the convex portion 121 includes the recess portion 123 recessed in a dot shape at a central area of the convex portion 121. Herein, at least two recess portions 123 are formed on each of the at least one convex portion 121 in one direction corresponding to the width of the battery.

Herein, the central area of the convex portion 121 may refer to an area defined based on the center point determined by the major axis (lengthwise axis) and the minor axis (widthwise axis) of the convex portion 121.

For example, when the central area is defined based on the center point determined by the major axis of the convex portion 121, which has a length of L in the longitudinal direction, and the minor axis of the convex portion 121, which has a width of W in the width direction, the central area may refer to an area that includes positions spaced from the center point by 0.01 L to 0.45 L, 0.05 L to 0.4 L, or 0.1 L to 0.3 L in the longitudinal direction, and by 0.01 W to 0.45 W, 0.05 W to 0.4 W, or 0.1 W to 0.3 W in the width direction. However, the present disclosure is not limited thereto.

Further, the recess portion 123 may include not only the above-described dot shape, but also one or more shapes selected from prismatic, cylindrical, and modified shapes thereof.

In an embodiment, the shape of the recess portion 123 may include a tapered structure in which a lower portion has a smaller area than an upper portion in the thickness direction of the convex portion 121. That is, the shape of the recess portion 123 may include a shape in which the cross-sectional area decreases in the thickness direction from the surface of the convex portion 121.

Since the recess portion 123 has the tapered structure, the formation of irregular electrode layer gaps and large gaps can be suppressed when the battery is bent.

In an embodiment, an outer diameter of the recess portion 123 can be freely adjusted within a width range of the convex portion 121 based on the width direction.

For example, when the convex portion 121 has a width of W, the recess portion 123 may have an outer diameter of 0.1 W to 0.9 W, 0.2 W to 0.9 W, 0.3 W to 0.9 W, 0.3 W to 0.85 W, or 0.3 W to 0.8W, but is not limited thereto. Herein, the outer diameter refers to the largest diameter of the recess portion 123 formed at the uppermost end of the convex portion 121.

Also, a depth of the recess portion 123 can be freely adjusted within a height range of the convex portion 121 based on the longitudinal direction.

In an embodiment, when the convex portion 121 has a height of H, the recess portion 123 may have a depth of 0.05 H to 0.9 H, 0.1 H to 0.9 H, 0.1 H to 0.8 H, 0.2 H to 0.8 H, 0.3 H to0.8 H, 0.4 H to 0.8 H, or 0.5 H to 0.8 H, but is not limited thereto.

However, as described above, to effectively suppress the formation of irregular electrode layer gaps and large gaps when the battery is bent, the size of the recess portion 123 based on the outer diameter and the depth of the recess portion 123 may satisfy the above-described ranges.

For example, the convex portion 121 and the concave portion 122 may be identical to or different from each other in width. However, the recess portion 123, which is recessed at a part of the convex portion 121 as described above, may provide the same effect regardless of the widths of the convex portion 121 and the concave portion 122.

Referring to **FIG. 2****,** for example, a gap 150 between at least two recess portions 123a formed on a first convex portion 121a among the at least one convex portion 121 is designed to be equal to the gap 150 between at least two recess portions 123b formed on a second convex portion located next to the first convex portion 121a.

Herein, the recess portions 123 formed on the first convex portion 121a have first gaps 135a and 135b relative to the edge area 130. To this end, the at least two recess portions 123a and 123b may be formed at positions spaced from the edge areas 130 at both ends of the exterior material 100 by a distance of 0.1 K to 0.4 K, preferably 0.15 K to 0.35 K, more preferably 0.2 K to 0.35 K, and still more preferably 0.25 K (1/4 K). Herein, K represents the distance between the edge areas 130 at the both ends.

For example, one of the at least two recess portions 123a on the first convex portion 121a may be formed to have the first gap 135a relative to an edge area 130a located at one end of the exterior material 100, and another one of the at least two recess portions 123a on the first convex portion 121a may be formed to have the first gap 135b relative to an edge area 130b located at the other end of the exterior material 100. This design is intended to ensure that when the battery 10 is deformed, at least two recess portions support the internal electrodes so that they are not lifted or deformed into the empty space between the concavo-convex pattern of the exterior material 100 and the electrode assembly, or more critically, not bent. For example, the first gaps 135a and 135b represent the case where the distance between recess portions located on adjacent convex portions is the same. Specifically, the first gaps 135a and 135b may refer to points that are one-fourth the length between both the edge areas, measured from one of the edge areas.

Specifically, the recess portion 123 on the first convex portion 121a is formed to have the first gaps 135a and 135b relative to the edge area 130. Thus, according to the result of bending test of the battery 10, it was found that when the distance between the internal positive and negative electrodes, i.e., electrode layers, of the exterior material 100 is 0.02 mm before bending the battery 10, when the battery 10 is bent 100 times, and when the battery 10 is bent 3,000 times, the distance between the electrode layers is maintained at 0.02 mm. Therefore, it is possible to suppress performance degradation of the battery 10 and a decrease in the durability of the exterior material 100 caused by the formation of irregular electrode layer gaps and large gaps. Also, it is possible to suppress lithium plating (Li-plating), which may be caused by an increase in electrode layer gap, and thus possible to eliminate potential safety risks.

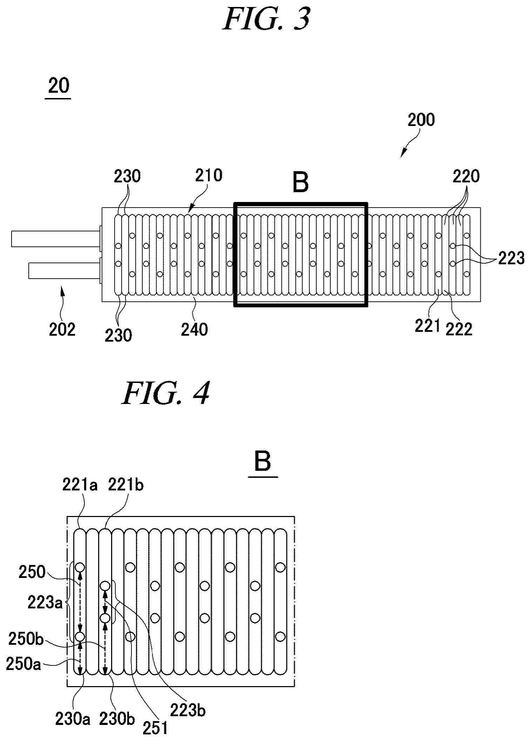

**FIG. 3** is a diagram illustrating a battery according to a second embodiment of the present disclosure, and **FIG. 4** is an enlarged view of an area B of the battery shown in **FIG. 3****.**

According to the second embodiment, a battery 20 is designed such that the gap between at least two recess portions formed on a first convex portion among at least one convex portion is different from the gap between at least two recess portions formed on a second convex portion.

Referring to **FIG. 3****,** the battery 20 according to the second embodiment of the present disclosure includes an exterior material 200, an electrode assembly and an electrode lead 202. The electrode assembly includes a plurality of electrodes and may further include an active material and a separator, and may have a structure in which they are stacked in a thickness direction.

Further, the electrode assembly may include electrode connection tabs and lead connection tabs. The electrode connection tabs may be formed to protrude from one ends of the first and second electrode plates in the longitudinal direction, and electrode connection tabs protruding from electrodes having the same polarity may be coupled to each other. The electrodes may be electrically connected in parallel by the electrode connection tabs. The lead connection tabs are connected to the electrode lead 202, and may protrude from the electrode plates of the negative electrode and the positive electrode so as to be coupled to the electrode lead 202.

The exterior material 200 according to the second embodiment of the present disclosure is formed to accommodate the electrode assembly.

Specifically, the exterior material 200 includes an accommodating part 210 and a sealing part 240. The accommodating part 210 may form a space for accommodating the electrode assembly, and the sealing part 240 may be bonded to seal the accommodated electrode assembly from the outside. For example, the accommodating part 210 may correspond to an area of the two exterior materials 200 that face each other while being spaced apart from each other. In order to form the accommodating part 210, the exterior material 200 may be processed to be pressed and protruded in the thickness direction so that a predetermined area of the exterior material 200 has a substantially rectangular bowl (or cup) shape.

More specifically, the exterior material 200 according to the second embodiment includes a concavo-convex pattern 220 including at least one concave portion 222 and at least one convex portion 221. The at least one concave portion 222 and the at least one convex portion 221 include an edge area 230 that forms a boundary line in contact with the sealing part 240 at an end portion in one direction corresponding to the width of the battery.

For example, the concavo-convex pattern 220 extends in one direction and is repeatedly disposed in a direction intersecting with the one direction. Specifically, the concavo-convex pattern 220 is protruded and recessed alternately in the thickness direction (i.e., protruded alternately in opposite directions) so as to have a concavo-convex shape along the one direction. Here, the one direction may be the above-described width direction, and the direction in which the concavo-convex pattern 120 is repeated may be the longitudinal direction. Due to the protruded and recessed concavo-convex pattern 120, the exterior material 100 forming the accommodating part 110 may have a wave or crease pattern in the longitudinal direction.

Hereinafter, the concavo-convex pattern 220 will be described in more detail with reference to **FIG. 4****.**

a recess portion 223 recessed at a part of the convex portion 221 is formed at the convex portion 221. Herein, the shape and size of the recess portion 223 are the same as described above, and detailed descriptions thereof will be omitted.

For example, if the convex portion 221 includes the recess portion 223 recessed in a dot shape at a central area of the convex portion 221, the next convex portion 221 may include the recess portion 223 recessed in a dot shape at an outer area. Herein, at least two recess portions 223 are formed on each of the at least one convex portion 221 in one direction corresponding to the width of the battery. For example, the convex portion 221 and the concave portion 222 may be identical to or different from each other in width, and may provide the same effect regardless of the widths.

Referring to **FIG. 4****,** for example, a gap 250 between at least two recess portions 223a formed on a first convex portion 221a among the at least one convex portion 221 is designed to be different from a gap 251 between at least two recess portions 223b formed on a second convex portion221b located next to the first convex portion 221a.

Herein, the recess portions 223a formed on the first convex portion 221a have a second gap 250a relative to an edge area 230a, and the recess portions 223b formed on the second convex portion221b have a third gap 250b relative to an edge area 230b.

To this end, the at least two recess portions 223a on the first convex portion 221a may be formed at positions spaced from the edge areas 230a at both ends of the exterior material 100 by a distance of 0.1 K to 0.25 K, preferably 0.15 K to 0.25 K, and more preferably 0.2 K (1/5 K). Herein, K represents the distance between the edge areas 230a at the both ends.

Also, the at least two recess portions 223b on the second convex portion221b may be formed at positions spaced from the edge areas 230b at both ends of the exterior material 100 by a distance of 0.25 K' to 0.4 K', preferably 0.25' K to 0.35 K', and more preferably 0.33 K' (1/3 K'). Herein, K' represents the distance between the edge areas 230b at the both ends.

Specifically, the at least two recess portions 223a on the first convex portion 221a are formed at positions spaced from the edge areas 230a at both ends of the exterior material 100 by one-fifth the distance K between the edge areas 230a. Thus, the at least two recess portions 223a are formed to have the second gap 250a. Also, the at least two recess portions 223b on the second convex portion 221b are formed at positions spaced from the edge areas 230b at both ends of the exterior material 100 by one-third the distance K' between the edge areas 223b. Thus, the at least two recess portions 223b are formed to have the third gap 250b. In this case, if a recess portion is formed to deviate from the edge area by one-fifth the distance between the edge areas at both ends, it may fail to suppress the lifting (large gaps) of the internal electrodes in the cell width direction.

Further, a recess portion is formed to deviate from the edge area by one-third the distance between the edge areas at both ends. Thus, when two recess portions are concentrated at a central area of the exterior material (i.e., when the distance between the recess portions becomes equal to or less than an outer diameter of a recess portion), interference may occur between the recess portions. As a result, the shape of the exterior material may be deformed, and it may fail to suppress an increase in electrode layer gap (large gap).

For example, one of the at least two recess portions 223a on the first convex portion 221a may be formed to have the second gap 250a relative to the edge area 230a located at one end of the exterior material 100, and the at least two recess portions 223b on the second convex portion221b may be formed to have the third gap 250b relative to the edge area 230b located at one end of the exterior material 100 .

In the same manner, another one of the at least two recess portions 223b on the first convex portion 221a may be formed to have a second gap relative to an edge area (not shown) located at the other end of the exterior material 100, and another one of the at least two recess portions 223b on the second convex portion221b may be formed to have a third gap relative to an edge area (not shown) located at the other end of the exterior material 100.

This design is intended to ensure that when the battery 10 is deformed, at least two recess portions support the internal electrodes so that they are not lifted or deformed into the empty space between the concavo-convex pattern of the exterior material 100 and the electrode assembly, or more critically, not bent.

Specifically, the at least two recess portions 223a on the first convex portion 221a are formed to have the second gap 250a relative to the edge area 230, and the at least two recess portions 223b on the second convex portion221b are formed to have the third gap 250b relative to the edge area 230. Thus, according to the result of bending test of the battery 20, it was found that when the distance between the internal positive and negative electrodes, i.e., electrode layers, of the exterior material 200 is 0.02 mm before bending the battery 20, when the battery 20 is bent 100 times, and when the battery 20 is bent 3,000 times, the distance between the electrode layers is maintained at 0.02 mm. Therefore, it is possible to suppress performance degradation of the battery 20 and a decrease in the durability of the exterior material 100 caused by the formation of irregular electrode layer gaps and large gaps. Also, it is possible to suppress lithium plating (Li-plating), which may be caused by an increase in electrode layer gap, and thus possible to eliminate potential safety risks.

The exterior material 100 according to the first embodiment and the exterior material 200 according to the second embodiment includes the accommodating parts 110 and 210 and the sealing parts 140 and 240, respectively.

The accommodating part 110 or 210 may form a space for accommodating the electrode assembly, and the sealing part 140 or 240 may be bonded to seal the accommodated electrode assembly from the outside. In order to form the accommodating part 110 or 210, the exterior material 100 or 200 may be processed by pressing the sealing part 140 or 240 in the thickness direction so that a predetermined area of the exterior material 100 or 200 has a substantially rectangular bowl (or cup) shape.

The sealing part 140 or 240 seals the electrode assembly by bonding sealing surfaces along edges of the accommodating part 110 or 210. For example, the sealing surfaces refer to the surfaces of the exterior material 100 or 200. The two sealing surfaces overlapping along edges of the accommodating part 110 or 210 are bonded to each other so that an inner space (the accommodating part 110 or 210) can be isolated from the outside. Herein, the electrode assembly and the electrolyte described above may be accommodated in the inner space, and the electrode assembly and the electrolyte may be kept in a sealed state.

Further, the sealing part 140 or 240 may have a flat plate shape extending in the width direction or the longitudinal direction. For example, the flat plate shape of the sealing part 140 or 240 may not be bent so that its surfaces do not face each other. Alternatively, the sealing part 140 or 240 may have a pattern different from the concavo-convex pattern 120 or 220. For example, the sealing part 140 or 240 may have a pattern having a lower height in the thickness direction of the exterior material 100 or 200 than the concavo-convex pattern 120 or 220.

The exterior material 100 or 200 according to an embodiment of the present disclosure is formed such that the concavo-convex pattern 120 or 220 of the accommodating part 110 or 210 is in close contact with the sealing part 140 or 240. Accordingly, a space between the concavo-convex pattern 120 or 220 and the sealing part 140 or 240 in which stress can be concentrated is not formed in the present embodiment. By removing the structurally weak part, it is possible to greatly reduce the possibility of damaging an end portion in one direction of the concavo-convex pattern or the sealing part 140 or 240 in a usage environment where repeated bending occurs. Accordingly, the battery 10 or 20 as an electrochemical cell and the exterior material 100 or 200 according to the present disclosure can be improved in durability without further reinforcing or adding materials, and can be improved in safety due to a lower likelihood of damage and leakage.

Meanwhile, the electrode lead 102 or 202 is connected to the electrode assembly inside the exterior material 100 or 200 and extended to be exposed to the outside of the exterior material 100 or 200. The electrode lead 102 or 202 functions as a terminal for electrical connection with the electrode assembly accommodated in the exterior material 100 or 200, and when the sealing part 140 or 240 is formed, the electrode lead 102 or 202 may be bonded as being interposed between the sealing surfaces so as to penetrate the sealing part 140 or 240. A pair of electrode leads 102 or 202 of the positive electrode and the negative electrode may be coupled to the same poles of the lead connection tabs provided in the electrode assembly.

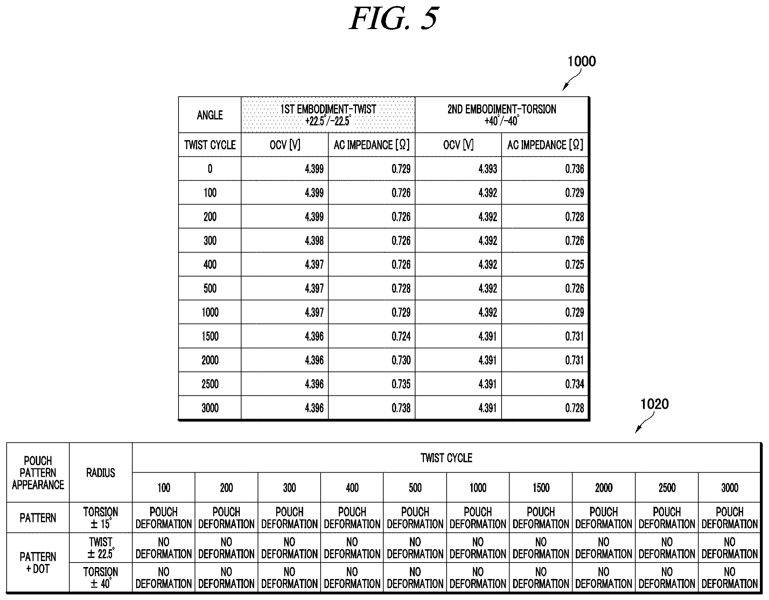

**FIG. 5** is a diagram showing the evaluation results of torsion and twist for a flexible battery manufactured using an exterior material with only a concavo-convex pattern according to Comparative Example and a flexible battery manufactured using an exterior material with both a concavo-convex pattern and a recess portion according to an embodiment of the present disclosure. Referring to **FIG.** 5, dot-patterned recess portions 123 and 223 are formed on the convex portions 121 and 221 of the exterior materials 100 and 200, respectively, of the present disclosure (without a reinforcing structure). Thus, it is possible to suppress the formation of irregular electrode layer gaps and large gaps when deformation, such as bending, twist, or torsion, is applied to the battery.

Hereinafter, a first flexible battery manufactured using an exterior material with only a concavo-convex pattern including the convex portion 121 or 221 and the concave portion 122 or 222 according to Comparative Example and second flexible batteries manufactured using exterior materials with both concavo-convex patterns including the convex portions 121 and 221 and the concave portions 122 and 222 and the recess portions 123 and 223 formed on the convex portions 121 and 221 according to the first and second embodiments, respectively, of the present disclosure will be compared and described. For example, a test may be performed by applying torsional deformation of ±15° to the first flexible battery and both twist deformation of ±22.5° and torsional deformation of ±40° to the second flexible batteries, based on a predetermined cycle.

For example, in a state where each flexible battery is fully charged to 100%, the initial open circuit voltage (OCV) and AC impedance (1,000 Hz) values of the battery are recorded, and, then, a polyimide (PI) tape is attached to a terminal of each flexible battery to perform an isolation process and each flexible battery is fixed to the clamps of the test equipment.

While the clamps hold both ends of the flexible battery, torsion that causes one clamp to be repeatedly twisted at a predetermined angle and twist that causes the two clamps to rotate in opposite directions at positive and negative angles may be evaluated.

Then, OCV and AC impedance (1,000 Hz) values of the flexible batteries are measured by the evaluation method, and any deformation, crack, leakage, ignition, and explosion of the exterior materials of the flexible batteries before and after evaluation are inspected.

Specifically, in Comparative Example (first flexible battery), deformation in the battery pouch exterior was observed, and after the evaluation of twist, 14 irregular electrode layer gaps were found inside the first flexible battery.

However, according to the first and second embodiments of the present disclosure, even after the evaluation of torsion or twist (at a maximum twist angle ±45 degrees, 3,000 times), the second flexible batteries showed no significant increase or decrease in OCV or AC impedance (1,000 Hz) values from the initial values, and no significant change in the battery pouch exterior was observed. Further, in order to suppress the formation of irregular electrode layer gaps (i.e., increased distance between the positive and negative electrodes) inside the exterior material caused by repeated deformation, dot-patterned recess portions were formed on the convex portions in the width direction of the battery to provide flexibility. In this case, irregular electrode layer gaps or large gaps were not found in the second flexible batteries according to the first embodiment (linear dot pattern) and the second embodiment (dispersed dot pattern), and no deformation, crack, and leakage in the battery pouch exterior occurred.

These test results confirm that a flexible battery in which a concavo-convex pattern is formed and dot-patterned recess portions are formed on convex portions is capable of stable electrochemical operation even under severe torsion or twist, suppresses the occurrence of crack in a pouch, and significantly improves the mechanical durability.

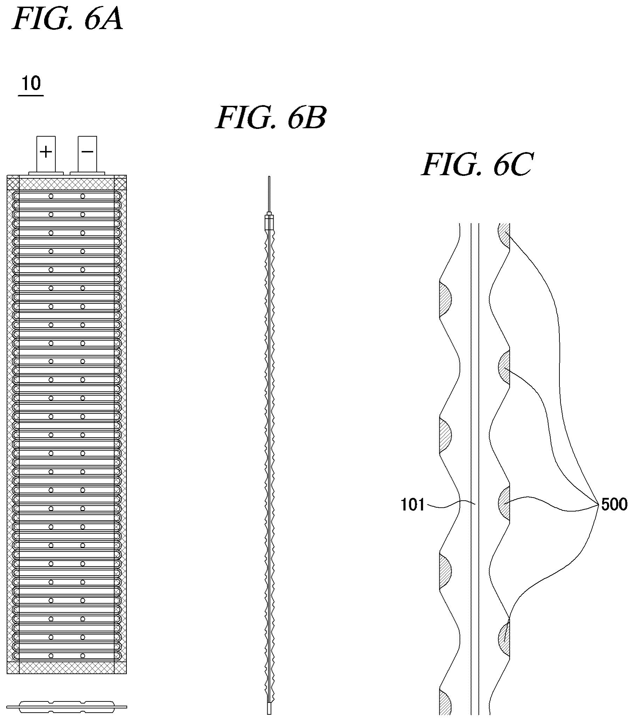

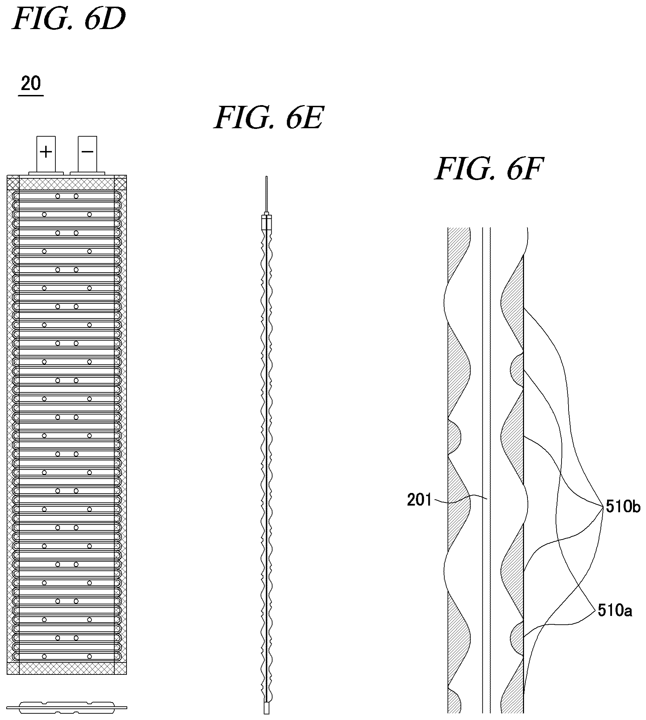

**FIG. 6** is a diagram illustrating a reinforcing structure further included in the exterior material formed on the recess portion according to the present disclosure. Referring to **FIG.** 1 to **FIG.** 6, reinforcing structures 500, 510a and 510b are formed in the exterior materials 100 and 200 of the batteries 10 and 20.

**FIG. 6A** to **FIG. 6C** show a plan view, a side view, and an internal view, respectively, of the exterior material 100 according to the first embodiment. In the battery 10, the reinforcing structure 500 for the exterior material 100 is formed on the at least two recess portions 123 on the convex portions 121 of the exterior material 100. For example, in the case of the battery 10 designed such that the gap between the at least two recess portions 123a formed on the first convex portion 121a among the at least one convex portion 121 is equal to the gap between the at least two recess portions 123b formed on the second convex portion 121b located next to the first convex portion 121a, the reinforcing structure 500 for the exterior material 100 is formed on the recess portions 123.

Although not illustrated in the drawings, the reinforcing structure 500 for the exterior material 100 may be formed on the recess portions 123 and the reinforcing structure 510b for the exterior material 100 may also be formed on the other outer area of the exterior material 100.

**FIG. 6D to FIG. 6F** show a plan view, a side view, and an internal view, respectively, of the exterior material 200 according to the second embodiment. In the battery 20, the reinforcing structures 510a and 510b for the exterior material 200 are formed on the at least two recess portions 223 on the convex portions 221 of the exterior material 200 and/or on the other outer area of the exterior material 200. For example, in the case of the battery 20 designed such that the gap between the at least two recess portions 223a formed on the first convex portion 221a among the at least one convex portion 221 is different from the gap between the at least two recess portions 223b formed on the second convex portion 221b located next to the first convex portion 221a, the reinforcing structure 510a for the exterior material 200 is formed on the recess portions 223 and the reinforcing structure 510b for the exterior material 200 is formed on the other outer area of the exterior material 200.

**The** reinforcing structures 500, 510a and 510b may be made of polymers. In particular, the reinforcing structures 500, 510a and 510b may be made of elastomers with a Shore hardness of at least 60 among the polymers. Examples of the elastomers include butyl rubber, ethylene-vinyl acetate copolymers (EVA), isoprene (IR), natural rubber (NR), neoprene (CR), polyurethane elastomers, and silicone elastomers.

It is assumed that silicone elastomers are used for the reinforcing structures 500, 510a and 510b. Herein, a molding process of the reinforcing structures 500, 510a and 510b may be performed at a temperature of 90°C and a pressure of 4 MPa for 120 seconds.

For example, if silicone elastomers with a low Shore hardness of about 30 to about 50 are used, the reinforcing structures 500, 510a and 510b cannot effectively suppress deformation of the recess portions. Thus, these materials are not suitable for the reinforcing structures 500, 510a and 510b.

However, if silicone elastomers with a Shore hardness of at least 60 are used as in the present disclosure, the reinforcing structures 500, 510a and 510b can be easily molded and deformation of the recess portions can be suppressed. Also, the reinforcing structures 500, 510a and 510b can effectively function to suppress bending of the batteries.

Further, when the flexible batteries are bent 3,000 times with a curvature radius of 15 mm, no destruction or damage was observed in the reinforcing structures 500, 510a and 510b. Since the reinforcing structures 500, 510a and 510b are attached to the surfaces of the batteries, the adhesion to heteromaterials (PET, NY and silicone) is superior to that achieved with general adhesives. When the reinforcing structures 500, 510a and 510b are molded, a process of applying an adhesive can be omitted, which simplifies the molding process.

Furthermore, compared to flexible batteries without the reinforcing structures 500, 510a and 510b, the occurrence of crack can be suppressed.

A comparison of the shape and number of cracks in the flexible batteries including the reinforcing structures 500, 510a and 510b with a low Shore hardness (e.g., 30 to 50) shows that both the crack size and number of cracks are significantly reduced in the battery manufactured using a silicone elastomer with a Shore hardness of 60 or more. Therefore, it is preferable to use a silicone elastomer with a Shore hardness of 60 or more (with a modulus of elasticity of 0.16 kgf/mm²). In this case, the upper limit of Shore hardness for the reinforcing structures 500, 510a and 510b is not specifically restricted as long as it does not cause damage to the flexible battery during a curing process while the reinforcing structures 500, 510a and 510b are manufactured, but it may be 100 or less.

It is possible to minimize pouch damage, which may occur due to repeated deformation (bending), in the exterior material 100 or 200 formed on a central area of the battery accommodating the electrode assembly 101 or 201.

**The** reinforcing structures 500, 510a and 510b located on the concavo-convex patterns 120 and 220 help suppress deformation of the batteries beyond the reference or limit range. Thus, it is possible to suppress changes in the electrode interface caused by repeated bending of the battery or excessive deformation of the pouch. Accordingly, it is possible to suppress an increase in distance between the negative and positive electrodes, which need to be in close contact, caused by an increase in electrode layer gap of the electrodes stacked in the pouch (exterior material) and also possible to suppress a sudden increase in resistance or Li-plating.

A method for manufacturing the exterior material 100 or 200 according to the present disclosure may include processing the exterior material 100 or 200 and accommodating the electrode assembly 101 or 201, followed by sealing to assemble the electrochemical cell 10. The method may include a process of forming the concavo-convex pattern 120 or 220 and a process of forming the sealing part 140 or 240. In the process of forming the concavo-convex pattern 120 or 220, the exterior material 100 or 200 may be deformed by applying pressure thereto, and in the process of forming the sealing part 140 or 240, the exterior material 100 or 200 may be bonded to accommodate the electrode assembly 101 or 201.

Also, in the process of forming the sealing part 140 or 240 according to the present disclosure, an overlap area, which is a part of the concavo-convex pattern 120 or 220, may be coupled to overlap with the sealing part 140 or 240. The overlap area may be an end portion of the concavo-convex pattern 120 or 220 in one direction (width direction), and the overlap area may overlap with the sealing part 140 or 240 so as to bond the two sealing surfaces. As a result, the overlap area may be processed to form a part of the concavo-convex pattern 120 or 220 when the concavo-convex pattern 120 or 220 is formed and may be finally included in one area of the sealing part 140 or 240. Accordingly, the edge area 130 or 230 may be formed between the overlap area and the concavo-convex pattern 120 or 220.

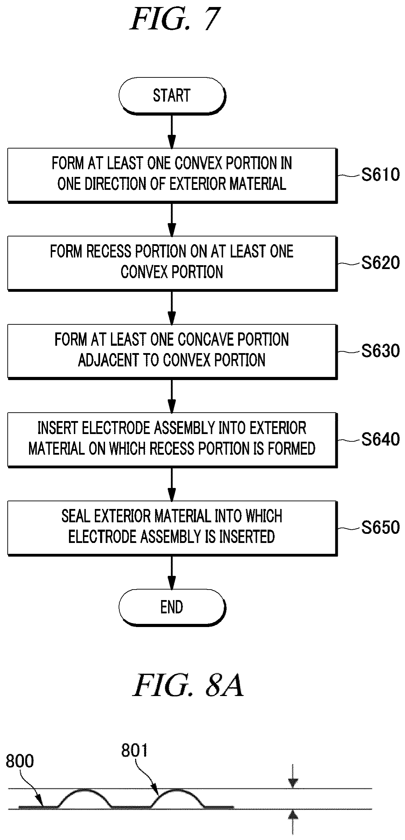

**FIG. 7** is a flowchart showing a method for manufacturing the battery 10 according to the first embodiment and the battery 20 according to the second embodiment. Herein, each battery may undergo the same manufacturing process.

In a process S610, the at least one convex portion 121 or 221 may be formed in one direction of the exterior material 100 or 200. For example, the at least one convex portion 121 or 221 may be disposed between the two concave portions 122 or 222 and may be formed to protrude in a direction opposite to that of the concave portions 122 or 222.

**An** outer diameter of the recess portion may be designed to be 30% to 85% of the width of the convex portion. If the outer diameter of the recess portion is less than 30% of the width of the convex portion, it may fail to suppress the formation of irregular electrode layer gaps and large gaps. If the outer diameter of the recess portion exceeds 85%, it may interfere with adjacent concave portions and deform their shape.

In a process S620, the recess portion 123 or 223 may be formed on the at least one convex portion 121 or 221. For example, if the convex portion 121 or 221 has a width of W, the outer diameter of the recess portion 123 may be from 0.3 W to 0.85 W, or from 0.35 W to 0.8 W, but is not limited thereto.

For example, the recess portion 123 or 223 may be formed using a precision pneumatic press that applies pressure with a dot punch. Herein, the precision pneumatic press may be configured as a four-axis set equipped with a punch and a die along with a ball bush. The gap between the punch and the die is physically controlled by a limit block. Thus, it is possible to suppress damage to the exterior material 100 or 200 by adjusting the depth of the recess portion 123 or 223 and regulating the press drop velocity.

In a process S630, the at least one concave portion 122 or 222 may be formed adjacent to the convex portion 121 or 221. The concave portion 122 or 222 may be formed to protrude toward an inner space of the accommodating part 110, *i.e.,* the electrode assembly 101 or 201 being accommodated. Also, the convex portion 121 or 221 may be disposed between the two concave portions 122 or 222 and may be formed to protrude in a direction opposite to that of the concave portions 122 or 222.

Herein, the process of forming the concave portion 122 or 222 may be performed before or after a process of pressing the exterior material 100 or 200 on which the convex portion 121 or 221 is formed, which will be described later. If the concave portion 122 or 222 is formed after pressing the exterior material 100 or 200 on which the convex portion 121 or 221 is formed, additional pressing may be performed on the exterior material 100 or 200.

In a process S640, the electrode assembly 101 or 201 may be inserted into the exterior material 100 or 200 on which the recess portion 123 or 223 is formed.

In a process S650, the exterior material 100 or 200 into which the electrode assembly 101 or 201 is inserted may be sealed.

Although not illustrated in **FIG.** 7, the method may further include the process of pressing the exterior material 100 or 200 on which the convex portion 121 or 221 is formed. In this case, the process of forming the recess portion 123 or 223 may include a process of forming the recess portion 123 or 223 on the convex portion 121 or 221 of the pressed exterior material 100 or 200.

In the descriptions above, the processes S610 to S650 may be divided into additional processes or combined into fewer processes depending on an embodiment. In addition, some of the processes may be omitted and the sequence of the processes may be changed if necessary.

In an embodiment, the concave portion 122 or 222 may be first formed on the exterior material 100 or 200, followed sequentially by pressing the formed concave portion 122 or 222, forming the convex portion 121 or 221, and then forming the recess portion 123 or 223 on the formed convex portion 121 or 221. That is, the process may proceed in order of: forming the concave portion on the exterior material → pressing → forming the convex portion → forming the recess portion.

Also, the process may proceed in order of: forming the concave portion on the exterior material → pressing → forming the convex portion → additional pressing → forming the recess portion.

In this case, a depth of the recess portion formed in the convex portion can be freely adjusted within a height range of the convex portion based on the longitudinal direction. For example, when the convex portion has a height of H, the recess portion may have a depth of 0.05 H to 0.9 H, 0.1 H to 0.9 H, 0.1 H to 0.8 H, 0.2 H to 0.8 H, 0.3 H to0.8 H, 0.4 H to 0.8 H, or 0.5 H to 0.8 H, but is not limited thereto, but is not limited thereto.

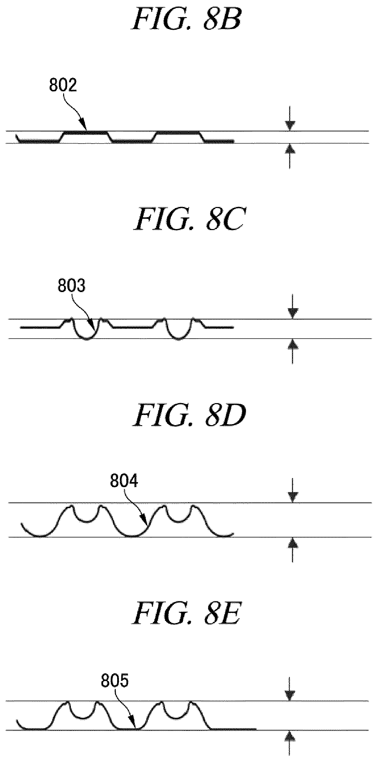

Hereinafter, the pattern depth of each process including the depth of the recess portion will be described with reference to **FIG. 8****.**

**FIG. 8** is a diagram illustrating the pattern depths formed in the respective processes for manufacturing the exterior material according to the present disclosure. The pattern depth of each process and a process of performing additional pressing on the exterior material 100 when the concave portion 122 or 222 is formed after pressing the exterior material 100 or 200 on which the convex portion 121 or 221 is formed will be described with reference to **FIG. 8****.**

Referring to **FIG. 8A****,** at least one convex portion 801 may be formed in one direction of an exterior material 800. For example, at least one convex portion 801 having a pattern depth of 0.45 mm to 0.50 mm may be formed on the exterior material 800.

Referring to **FIG. 8B****,** pressing 802 may be performed on the exterior material 800 on which the convex portion 801 is formed. For example, the pressing 802 may be performed such that the pattern depth of the convex portion 801 becomes 0.30 mm to 0.35 mm.

Referring to **FIG. 8C****,** a recess portion 803 may be formed on the convex portion 801 of the pressed exterior material. For example, at least two recess portions 803 having a pattern depth of 0.40 mm to 0.45 mm based on a maximum height of the pressed convex portion 801 may be formed on the exterior material 800 on which the convex portion 801 is formed.

Referring to **FIG.** 8D, at least one concave portion 804 may be formed adjacent to the convex portion 801. For example, at least one concave portion 804 having a pattern depth of 0.65 mm to 0.70 mm may be formed on the exterior material 800. In this case, the pattern depth of the concave portion 804 may be based on the maximum height of the pressed convex portion 801.

Referring to **FIG.** 8E, when the concave portion 804 is formed after pressing the exterior material 800 on which the convex portion 801 is formed, additional pressing 805 may be performed on the exterior material 100 or 200. For example, the additional pressing 805 may be performed such that the exterior material 800 on which the concave portion 804 is formed has a pattern depth of 0.50 mm to 0.55 mm. In this case, the final pattern depths of the convex portion 801 and concave portion 804 may be the same, and the pattern depth of the recess portion 803 may fall within the above-described depth range.

**As** described above, when the process proceeds in order of forming the convex portion on the exterior material → pressing → forming the recess portion → forming the concave portion → additional pressing, pressing is performed after the convex portion is formed to apply a uniform pressure to an upper end portion of the convex portion. Therefore, when the recess portion is formed, it is easier to achieve precise positioning and uniform depth. Then, by performing additional pressing after forming the concave portion, the overall pattern depth of the exterior material can be uniformly formed to the target value. Therefore, it is possible to improve the accuracy of the patterning process and reduce the defect rate.

In this case, pressing is performed with controlled pressure, time, and gap to suppress severe deformation or collapse of the recess portion.

Further, if the pressed pattern depth remains less than 90% of the depth of the convex portion even after two rounds of pressing, cracks resulting from metal layer breakage do not occur in the exterior material.

Consequently, the simplification of the patterning process reduces the defect rate and shortens the processing time due to fewer processes.

Meanwhile, separate from **FIG.** 8, the pattern depth of each process and a process of forming the concave portion before pressing the exterior material on which the convex portion is formed will be described below.

At least one convex portion may be formed in one direction of an exterior material. For example, at least one convex portion having a pattern depth of 0.45 mm to 0.55 mm may be formed on an exterior material.

At least one concave portion may be formed adjacent to the convex portion. For example, at least one concave portion having a pattern depth of 0.70 mm to 0.75 mm may be formed on the exterior material. In this case, the pattern depth of the concave portion may be based on a maximum height of the convex portion. When the concave portion is formed after the convex portion, the pattern depth of the convex portion may be set to match that of the concave portion, based on the lowermost end of the concave portion.

When the at least one concave portion is formed on the exterior material, pressing may be performed on the exterior material on which the at least one convex portion is formed. For example, pressing may be performed such that the exterior material on which the at least one convex portion is formed has a pattern depth of 0.50 mm to 0.55 mm.

A recess portion may be formed on the convex portion of the pressed exterior material. For example, at least two recess portions may be formed on the pressed exterior material having the convex portion and may have a depth within the above-described depth range, based on the maximum height of the convex portion.

**As** described above, when the process proceeds in order of forming the convex portion on the exterior material → forming the concave portion→ pressing → forming the recess portion, the simplification of the patterning process reduces the defect rate and shortens the processing time due to fewer processes.

In this case, if the convex and concave portions are formed on the exterior material before the pressing, a uniform pressure is not applied. Therefore, the pattern depth of the concave portion may decrease irregularly due to ease of compression under the same load. However, the pressing is performed as a final process, and, thus, optimization can be achieved through upper and lower die design to suppress severe asymmetric or non-uniform deformation.

Further, additional pressing may be optionally performed after the recess portion is formed.

According to the present disclosure, the effects of the recess portion formed on the convex portion are as follows. These effects may be derived by performing the same evaluation on the conventional exterior material (with only convex and concave portions) and the exterior material of the present disclosure (with convex and concave portions as well as recess portions on the convex portion).

Specifically, the evaluation methods include: a bending test (with a bending radius of 15 mm, 100 times) to check cracks or breakage of the exterior material; and CT scan to check the internal electrode arrangement and adhesion.

As a result of evaluating the conventional exterior material and the exterior material of the present disclosure, it was found that when the battery was repeatedly bent or deformed with a high curvature beyond a reference range or limit value, the conventional exterior material without recess portions was prone to cracking due to the bending or folding of the battery, which caused damage to the battery and electrolyte leakage.

However, the exterior material of the present disclosure with recess portions formed on the convex portion can minimize the formation of irregular electrode layer gaps and large gaps.

Furthermore, when the flexible battery manufactured using the exterior material with recess portions and a reinforcing structure formed on the recess portions according to the present disclosure were repeatedly bent, no cracks were observed due to the strength of the reinforcing structure and its resistance to bearing loads. Specifically, internal inspection of the exterior material according to the present disclosure revealed that the gap between electrode layers remained generally uniform during bending of the exterior material.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

**The** scope of the present disclosure is defined by the following claims rather than by the detailed description of the embodiment. It shall be understood that all modifications and embodiments conceived from the meaning and scope of the claims and their equivalents are included in the scope of the present disclosure.

### EXPLANATION OF CODES

10, 20: Battery, Electrochemical cell
100, 200: Exterior material
101, 201: Electrode assembly
102, 202: Electrode lead
110, 210: Accommodating part
120, 220: Concavo-convex pattern
121, 221: Convex portion
122, 222: Concave portion
123, 223: Recess portion
130, 230: Edge area
140, 240: Sealing part

## Claims

1. A battery, comprising:
an electrode assembly including a plurality of electrodes; and
an exterior material which accommodates the electrode assembly and on which a concavo-convex pattern including at least one concave portion and at least one convex portion is formed,
wherein the convex portion includes a recess portion recessed at a part of the convex portion.

2. The battery of Claim 1,
wherein at least two recess portions are formed on each of the at least one convex portion in one direction corresponding to a width of the battery.

3. The battery of Claim 2,
wherein a gap between at least two recess portions formed on a first convex portion among the at least one convex portion is designed to be equal to a gap between at least two recess portions formed on a second convex portion located next to the first convex portion.

4. The battery of Claim 2,
wherein the recess portion has a first gap relative to an edge area of the exterior material.

5. The battery of Claim 2,
wherein a gap between at least two recess portions formed on a first convex portion among the at least one convex portion is designed to be different from a gap between at least two recess portions formed on a second convex portion located next to the first convex portion.

6. The battery of Claim 5,
wherein the recess portion formed on the first convex portion has a second gap relative to an edge area of the exterior material.

7. The battery of Claim 5,
wherein the recess portion formed on the second convex portion has a third gap relative to an edge area of the exterior material.

8. The battery of Claim 1,
wherein the exterior material includes: an accommodating part that accommodates the electrode assembly; and
a sealing part that seals the electrode assembly by bonding sealing surfaces along edges of the accommodating part.

9. The battery of Claim 8,
wherein the at least one concave portion and the at least one convex portion include an edge area that forms a boundary line in contact with the sealing part at an end portion in one direction corresponding to a width of the battery.

10. The battery of Claim 8,
wherein the sealing part has a pattern having a lower height in a thickness direction of the exterior material than the concavo-convex pattern.

11. The battery of Claim 1,
wherein a reinforcing structure for the exterior material is formed on the recess portion.

12. A method for manufacturing a battery, comprising:
forming at least one convex portion in one direction of an exterior material;
forming at least one concave portion that is disposed adjacent to the convex portion;
forming a recess portion on the at least one convex portion;
inserting an electrode assembly into the exterior material on which the recess portion is formed; and
sealing the exterior material into which the electrode assembly is inserted.

13. The method of Claim 12, further comprising:
pressing the exterior material on which the convex portion is formed,
wherein in the forming the recess portion, the recess portion is formed in the convex portion of the pressed exterior material.

14. The method of Claim 12,
wherein the forming the concave portion is performed before or after the pressing the exterior material on which the convex portion is formed.

15. The method of Claim 14, further comprising:
additionally pressing the exterior material when the concave portion is formed after the pressing the exterior material on which the convex portion is formed.
